# EUROPEAN PATENT APPLICATION

(11) **EP 1 882 867 A2**
(43) Date of publication of application: **30.01.2008**
(21) Application number: 07011850.0
(22) Date of filing: 16.06.2007
(51) Int. Cl.: F16G 13/16

(54) **Folding assembly type cable protection and guide device**

(30) Priority: 24.07.2006 JP 2006201075
(71) Applicant: Tsubakimoto Chain Co., Kita-ku Osaka 530-0005 (JP)
(72) Inventor: Komiya, Shoichiro c/o Tsubakimoto Chain Co., Osaka 530-0005 (JP); Matsuda, Takayuki Tsubakimoto Chain Co.,, Osaka 530-0005 (JP)
(74) Representative: Patentanwälte Hosenthien-Held und Dr. Held

(57) **Abstract**

A folding assembly type cable protection and guide device is provided in which a cable is accommodated into a cable accommodating space (R). The cable protection and guide device can be easily manufactured by extrusion molding without requiring different metal molds to accommodate different size cables. Assembly is simplified. Dimensional stability of the cable accommodating space (R) is ensured during both linear and flexion movement which provides smooth linear and flexion movement of the device. The long body cable accommodating space (R) is a rectangularly shaped space surrounded by a synthetic resin film tape (100; 200). The synthetic resin film tape (100; 200) is assembled through a plurality of folding V grooves (110; 210) which extend along a longitudinal direction of the tape (100; 200) to allow for repeated linear and flexion movement.

## Description

The present invention relates to a cable protection and guide device. More specifically, it relates to a cable protection and guide device suitable for accommodating a comparatively light weight and small diameter cable which supplies a movable member with energy such as electric power or compressed air. Examples include: a semiconductor device, a pharmacy developing testing device, a vehicle door opening/closing device, a vehicle slide seat, and a vehicle motor sunroof. The cable protection and guide device safely and reliably guides and protects one or more cables even during movement of the portable member.

Conventional cable protection and guide devices for cables/hoses are known in the prior art. In the conventional device the upper edges and lower edges of pairs of oppositely spaced and similarly shaped link plates are respectively connected with flaps and bottom plates as connecting members. Such a device is disclosed in the Japanese Laid-Open Patent Publication No. Hei 10-47441.

Further, the Japanese Patent Indication No. 2001-514725 discloses a foldable protection element being composed of segments. Each segment is integration-molded or cast in one piece into a substantially flat structure from a synthetic substance and connected to each other by flexible bridges.

In the protection and guide chain described in Japanese Laid-Open Patent Publication No. Hei 10-47441 the link plates, flaps and bottom plates (which are their connecting members) must be reliably connected in multiple positions in the longitudinal direction of the cable. Problems arise from the complicated structure and its attendant assembly.

Further, when a foldable protection element described in Japanese Patent Indication No. 2001-514725 is injection-molded or cast in one piece and the element has a large width and length, there is a problem with producing a large metal mold. A long protection element cannot be easily manufactured because a long mold is required. Temperature control of large metal molds is difficult. Costs increase with mold size. Further, it is difficult and time consuming to assemble the various segments to each other one by one.

Accordingly, the object of the present invention is to provide a folding assembly type cable protection and guide device, wherein cable to be accommodated into the cable accommodating space is long. The cable protection and guide device can be easily manufactured by extrusion molding without changing the size of a metal mold. As a result, the assembly is simplified and integrity of the cable accommodating space is ensured during both linear and flexion movement.

The folding assembly type cable protection and guide device of the invention attains the above-mentioned object with a folding assembly type cable protection and guide device which is characterized by a cable accommodated into a rectangularly shaped cable accommodating space. The cable accommodating space is surrounded by a synthetic resin film tape assembled through a plurality of folding V grooves which are extended by extrusion molding along a longitudinal direction of the tape. The folding V grooves are provided for repeated linear and flexing movement throughout the device.

In addition to the example mentioned above, the folding assembly type cable protection and guide device of the invention attains the above-mentioned object with the following structure: outer circumferential wall formation sections, a pair of right and left side wall formation sections, and a pair of right and left inner circumferential wall formation sections. The synthetic resin film tape has outer circumferential wall formation sections which adjacently engage with each other in a longitudinal direction of the tape during linear movement and separate from each other to open at predetermined pitches in the longitudinal direction of the tape during flexional movement.

The pair of right and left side wall formation sections are adjacently disposed through a folding V groove on both sides of the outer circumferential wall formation section. The pair of right and left side wall formation sections are adjacently engaged with each other in the longitudinal direction of the tape during linear movement and separate from each other during flexional movement. The pair of right and left inner circumferential wall formation sections are adjacently disposed and engaged with each other in an overlapped manner along the longitudinal direction of the tape.

Further, the folding assembly type cable protection and guide device of the invention attains the above-mentioned object with the structure of a splitting slit. The splitting slit separates the outer circumferential wall formation sections and the pair of right and left side wall formation sections from each other at a predetermined pitch in a longitudinal direction of the tape during flexional movement. The splitting slit is created by punching, so that it crosses the folding V groove at the predetermined pitch and, at the same time, splits the folding V groove, while leaving the pair of right and left inner circumferential wall formation sections intact.

Further, in addition to the example described above, the folding assembly type cable protection and guide device attains the above-mentioned object with a concave portion/convex portion engagement mechanism. The concave portion/convex engagement mechanism restricts a lateral shift at the time of linear movement. The concave portion/convex engagement mechanism is provided by punching at the front and back positions through the splitting slit of the outer circumferential wall formation section.

The assembly type cable protection and guide device of the invention attains the above-mentioned object with the structure of an insertion/protrusion mechanism. The insertion/protrusion mechanism overlaps and engages with each other along the longitudinal direction of the tape. Further, the insertion/protrusion mechanisms are provided by punching the pair of right and left inner circumferential formation sections at predetermined intervals along the longitudinal direction of the tape.

Further, in addition to the examples above, the folding assembly type cable protection and guide device of the invention attains the above-mentioned object by use of an open window, which penetrates through the cable accommodating space. The open window is punched out at the cut aperture of the folding V groove for folding the side wall formation section, the inner circumferential wall formation section, and the splitting slit.

The synthetic resin film tape of the folding assembly type cable protection and guide device is molded of polypropylene.

The folding assembly type cable protection and guide device comprises a rectangularly shaped cable accommodating space surrounded by synthetic resin film tape of folding V grooves. These folding V grooves are extended by extrusion molding along a longitudinal direction of the tape enabling repeated linear and flexural movement. The synthetic resin film tape is cut as an integrated object. The cable protection and guide device can be made any length or width required. Thus, assembly is simplified. It is not necessary to connect a large number of link plates of a conventional protection and guide chain to each other for a specific cable length.

According to one example of the invention, since the synthetic resin film tape is continuously extrusion molded irrespective of the length of a cable to be accommodated, even a long body can be easily manufactured without the need for a metal mold. Extrusion molding does not require various sizes of metal molds as is the case of injection molding or casting in order to accommodate specific lengths of a cable.

Additionally, according to one example of the invention, since the synthetic resin film tape can be easily folded using a folding V groove, a rectangular shape cable accommodating space can be uniformly, reliably assembled in a predetermined size along the longitudinal direction of the tape.

According to another example of the folding assembly type cable protection and guide device, the synthetic resin film tape has outer circumferential wall formation sections, a pair of right and left side wall formation sections, and a pair of right and left inner circumferential wall formation sections. The outer circumferential wall formation sections adjacently engage with each other in a longitudinal direction of the tape during linear movement and separate from each other to open at predetermined pitches in the longitudinal direction of the tape during flexional movement. The pair of right and left side wall formation sections, which are adjacently disposed through a folding V groove on both sides of the outer circumferential wall formation section, are adjacently engaged with each other in the longitudinal direction of the tape during linear movement and separate from each other to open at predetermined pitches in the longitudinal direction of the tape during flexional movement. The pair of right and left inner circumferential wall formation sections, which are adjacently disposed through a folding V groove, are engaged with each other in an overlapped manner along the longitudinal direction of the tape when assembled and are disposed oppositely from the outer circumferential wall formation section.

In addition to the effect obtained in the first example, a rectangularly shaped cable accommodating space is obtained by folding the synthetic resin film tape through a folding V groove. The rectangularly shaped cable accommodating space is naturally maintained even during linear movement and flexion movement of the device. Form stability of the device can be ensured and the linear movement and flexion movement can be smoothly repeated for a long period of time. Adjacent outer circumferential wall formation sections and adjacent pairs of right and left side wall formation sections are respectively separated from each other to open in accordance with a radius of the flexion movement of the device. As a result, smooth flexion movement of the device can be attained.

Further, according to the folding assembly type cable protection and guide device of the invention, a splitting slit separates the outer circumferential wall formation sections and the pair of right and left side wall formation sections from each other at a predetermined pitch in a longitudinal direction of the tape during flexional movement. The splitting slit is created by punching and crosses the folding V groove at the predetermined pitch and at the same time splits the folding V groove while leaving the pair of right and left inner circumferential wall formation sections intact. A flexion pitch for forming a cable accommodating space can be changed as desired. Further, since the punching leaves a pair of right and left inner circumferential wall formation sections intact, a stable flexion path during flexion movement of the device is formed so that the cable can travel and be flexed in a stable manner.

According to the folding assembly type cable protection and guide device of another example, a concave portion/convex portion engagement mechanism which restricts a lateral shift at the time of linear movement is provided by punching at the front and back positions through the splitting slit. The punching form can be appropriately selected. Thus, a concave portion/convex portion engagement form of the concave portion/convex portion engagement mechanism can be changed. The concave portion/convex portion engagement mechanism restricts a lateral shift of the adjacent outer circumferential wall formation sections, so that snaking movement is avoided and smooth linear movement can be attained.

According to the insertion/protrusion mechanism example of the folding assembly type cable protection and guide device, the insertion/protrusion mechanisms overlap and engage with each other along the longitudinal direction of the tape. The insertion/protrusion mechanisms are provided by punching the pair of right and left inner circumferential formation sections at predetermined intervals along the longitudinal direction of the tape. The punching form can be appropriately selected. Thus, an insertion protrusion form can be easily changed in accordance with usability and a distortion of the rectangular shape cable accommodating space. Mutual estrangement which is liable to occur in a pair of right and left inner circumferential wall formation sections is suppressed, so that stability of the cable accommodating space can be ensured during linear movement and flexion movement.

An open window which penetrates into the cable accommodating space, is provided by punching at the intersection folding V groove, the inner circumferential wall formation section, and the splitting slit. Distortion deformation of the cable accommodating space which is liable to occur by an internal movement of the cable during linear movement and flexion movement of the device is absorbed. As a result, excellent shape retention of the cable accommodating space can be ensured. The folding assembly type cable protection and guide device with the open window not only contributes to weight reduction, but it also allows the cable to be observed in the cable accommodating space.

In the embodiment where the synthetic resin film tape is molded of polypropylene, extrusion molding and punching are easily performed and stability of the cable accommodating space is maintained.

A cable protection and guidance device which accommodates a long body can be easily manufactured by extrusion molding. This simplifies the manufacturing. Further, stability of the cable accommodating space is ensured at times of linear movement and flexion movement. Stability is achieved when the cable is accommodated into a rectangularly shaped cable accommodating space surrounded by a synthetic resin film tape. The cable accommodating space is extended by extrusion molding along a longitudinal direction of the tape, so that the cable accommodating space can withstand both repeated linear movement and flexing movement over long periods of time.

Materials for the folding assembly type cable protection and guide device of the present invention include synthetic resins such as polypropylene, polyethylene, polyester, etc. These synthetic resins resist flexural distortion which is likely to occur during flexing movement, so that excellent dimensional resistance for shape retention of the cable is achieved. Further, molding is also simplified with these resins. Preferably, polypropylene is used since extrusion molding and punching can be performed and the cable accommodating space exhibits sufficient dimensional stability when made from this resin.

The folding V grooves extended in a synthetic resin film tape are preferably formed with each V-groove having an angle of 90 degrees. This enables the V-groove to be folded so that a side wall formation section becomes perpendicular to an outer circumferential wall formation section or an inner circumferential wall formation section.

A concave portion/convex portion engagement mechanism has structure which restricts a lateral shift of the adjacent outer circumferential wall formation sections through a splitting slit during linear movement so that a snaking movement can be avoided. For example, the following forms may be used: a triangular tongue piece-shaped convex portion and a V-shaped concave portion, a trapezoid tongue piece-shaped convex portion and an inverse trapezoid-shaped concave portion, or a form with other concave portion/convex portions. In the first form comprised by the triangular tongue piece-shaped convex and the V-shaped concave portion, the V-shaped concave portion engages with the triangular tongue piece-shaped convex portion. In the second mentioned form comprised by the trapezoid tongue piece-shaped convex portion and the inverse trapezoid-shaped concave portion, the inverse trapezoid-shaped concave portion engages with the trapezoid tongue piece-shape convex portion.

Further, an insertion/protrusion mechanism in the folding assembly type cable protection and guide device may be used in which the insertion/protrusion mechanisms overlap each other along the longitudinal direction of the tape during folding assembly of the device. The shape and an arrangement interval of the insertion/protrusion mechanism may be appropriately selected.

Two embodiments of the present invention will be described with reference to FIGS. 1 to 6.
- FIG. 1: is an entire view of a folding assembly type cable protection and guide device, which is the first example according to the present invention.
- FIG. 2: is an enlarged perspective view of a linear state in FIG. 1.
- FIG. 3: is an enlarged view of a flexing state in FIG. 1.
- FIG. 4: is a development view of a synthetic resin film tape used in FIG. 1.
- FIG. 5: is an entire view of a folding assembly type cable protection and guide device, which is the second example according to the present invention.
- FIG. 6: is a development view of a synthetic resin film tape used in FIG. 1.

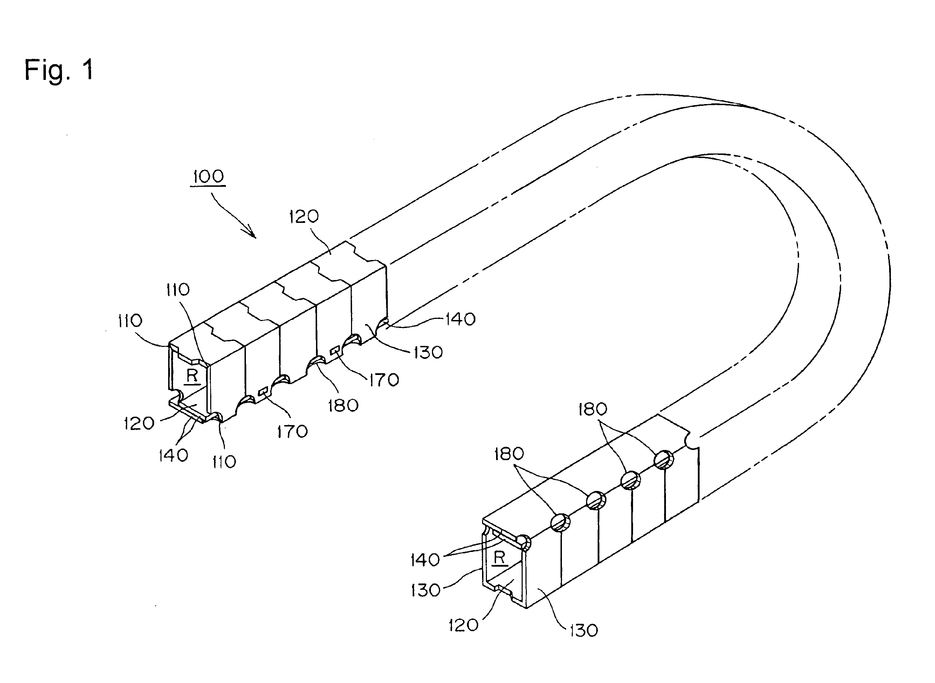

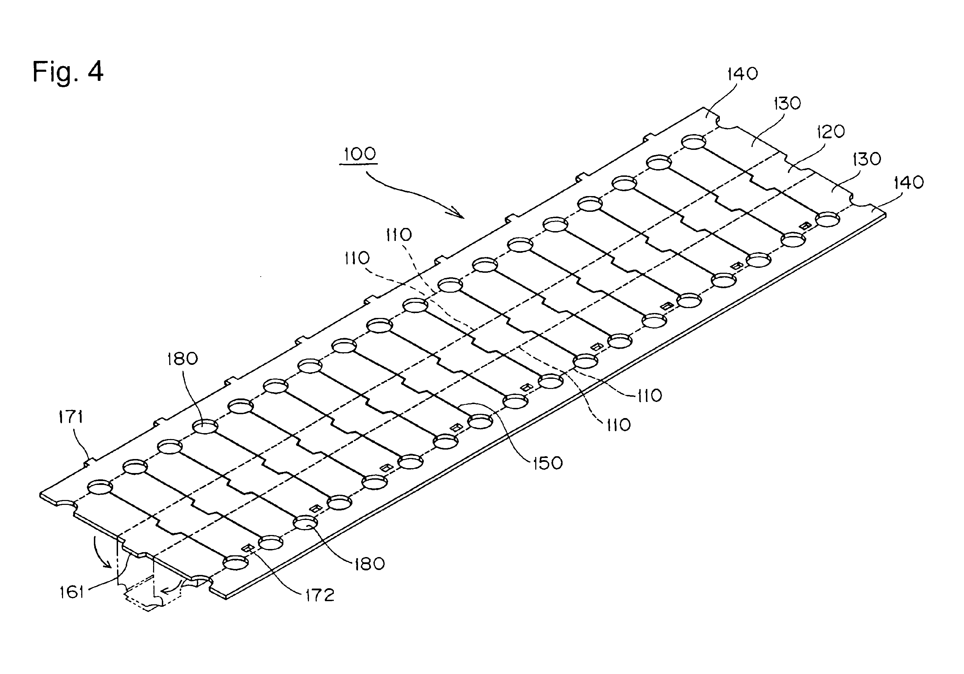

A folding assembly type cable protection and guide device, which is the first example according to the present invention, will be described with reference to FIGS. 1 and 4 below.

The folding assembly type cable protection and guide device of the present example is used for connecting a movable section and a stationary section of a device and supplying the device with energy such as electric power or compressed air. Examples may include: a semiconductor device, a pharmacy developing testing device, a vehicle door opening/closing device, a vehicle slide seat, or a vehicle motor sunroof. The folding assembly type cable protection and guide device safely and reliably guides and protects a cable (cables) C such as an electric cable, which transmits and supplies electric signals and a hose, which supplies pressure liquid or pressure gas.

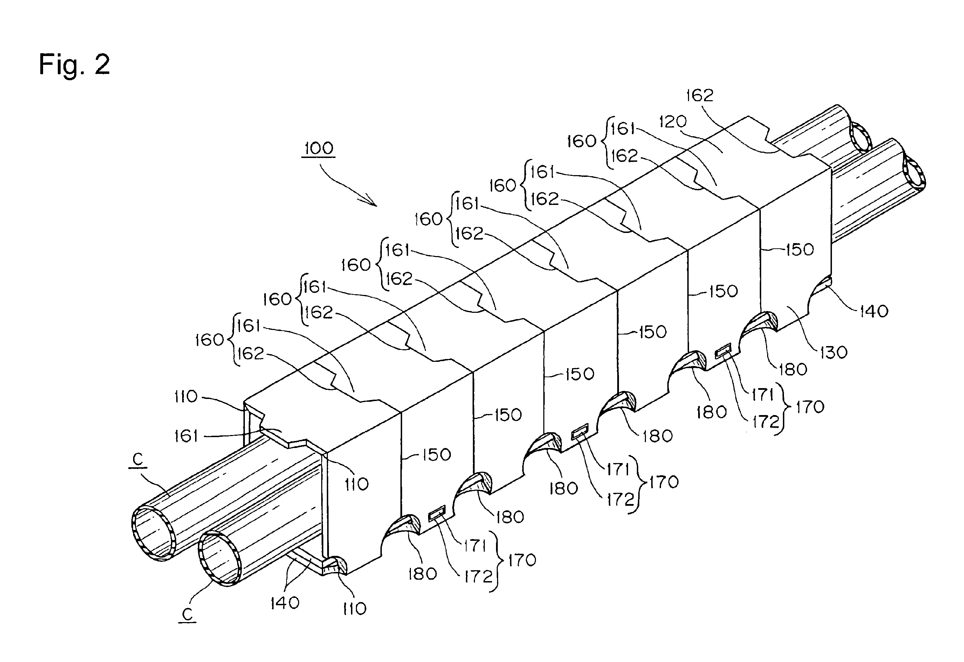

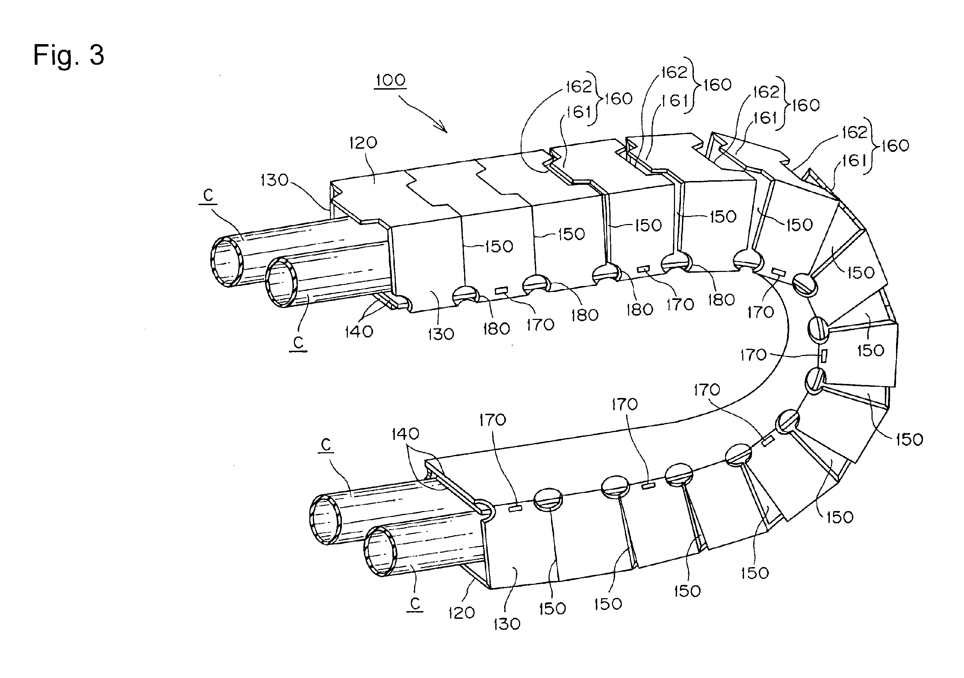

The device can exhibit a linear position or a flexing position in accordance with a relative remote movement state between the movable section and the stationary portion (not shown). As shown in FIGS. 1 to 3, the folding assembly type cable protection and guide device including a synthetic resin film tape 100 formed in such a manner that a cable C is accommodated into a rectangularly shaped cable accommodating space R surrounded by the tape having a plurality of folded V-grooves 110. The folded V-grooves 110 extend along the longitudinal direction of the tape and are able to withstand repeated linear movement and flexing movement.

It is noted that in the present example, polypropylene is used as a material of the synthetic resin film tape 100. Polypropylene is easily processed in extrusion molding and easily punched. Further, polypropylene provides stability of the cable accommodating space.

Namely, the above-mentioned synthetic resin film tape 100 includes: outer circumferential wall formation sections 120, a pair of right and left side wall formation sections 130, 130, and a pair of right and left inner circumferential wall formation sections 140, 140. The outer circumferential wall formation sections 120, adjacently engage with each other in a longitudinal direction of the tape during linear movement and separate from each other to open at predetermined pitches in the longitudinal direction of the tape during flexing movement. The pair of right and left side wall formation sections 130, 130, are adjacently disposed through a folding V groove 110 on both sides of the outer circumferential wall formation section 120. The pair of right and left side wall formation sections 130, 130 are adjacently engaged with each other in the longitudinal direction of the tape during linear movement. The pair of right and left side wall formation sections 130, 130 separate from each other to open at predetermined pitches in the longitudinal direction of the tape during flexing movement. Finally, the pair of right and left inner circumferential wall formation sections 140, 140, are adjacently disposed through a folding V groove 110. The pair of right and left inner circumferential wall formation sections 140, 140, are engaged with each other in an overlapped manner along the longitudinal direction of the tape when assembled and are oppositely disposed from the outer circumferential wall formation section 120.

The folding V groove 110 is formed as a V groove having an angle of 90 degrees between sides of the device. A cable accommodating space R which is formed by a synthetic resin film tape 100. The back side of the synthetic resin film tape 100 shown in FIG. 4 is folded in such a manner, so that the side wall formation section 130 becomes perpendicular to the outer circumferential wall formation section 120 and the inner circumferential wall formation section 140.

The cable C is accommodated in the cable accommodating space R and may be any length. The synthetic resin film tape 100 may be manufactured as a continuing integrated body in accordance with any body length. As a result, the synthetic resin film tape 100 can be used to accommodate a long cable C in the cable accommodating space R.

It is contemplated that the synthetic resin film tape 100 may be easily adapted to any length necessary to accommodate a cable C in the cable accomodating space R. The synthetic resin film tape 100 is continuously extruded and may also be cut in accordance with the particular length of the cable C to be accomodated in the cable accomodating space R.

A splitting slit 150 separates the outer circumferential wall formation sections 120 and the pair of right and left side wall formation sections 130, 130 from each other at a predetermined pitch in a longitudinal direction of the tape during flexing movement. The splitting slit 150 is disposed by punching, so that it crosses the folding V groove 110 at a predetermined pitch and at the same time splits the folding V groove, while leaving the pair of right and left inner circumferential wall formation sections 140, 140 intact.

In this manner, since a punching interval in the synthetic resin film tape 100 can be appropriately selected, a flexing pitch for forming the cable accommodating space R can be easily changed. Thus, the synthetic resin film tape 100 is subjected to punching while leaving a pair of right and left inner circumferential wall formation sections 140, 140 intact to form a stable flexing path during flexing movement.

The above-mentioned outer circumferential wall formation sections 120 contain a concave portion/convex portion engagement mechanism 160 in the splitting slit 150. The concave portion/convex portion engagement mechanism 160 comprises: a trapezoid tongue piece-shaped convex portion 161 and an inverse trapezoid-shaped concave portion 162 which engages with the trapezoid tongue piece-shaped convex portion 161. Such a concave portion/convex portion engagement mechanism 160 restricts lateral shifts of the adjacent outer circumferential wall formation sections 120 through the splitting slit 150, so that smooth linear movement is attained. The concave/convex portion engagement mechanism 160 avoids snaking movement during linear movement.

Further, an insertion/protrusion mechanism 170 is provided at predetermined intervals in the above-mentioned pair of right and left inner circumferential wall formation sections 140, 140 along the longitudinal direction of the tape. The insertion/protrusion mechanism 170 is comprised of an insertion protrusion 171 formed in one inner circumferential wall formation section 140 and an insertion hole 172 formed in the other inner circumferential wall formation section 140 to which the former inner circumferential wall formation section 140 is inserted. Thus, this insertion/protrusion mechanism 170 causes the pair of right and left inner circumferential wall formation sections 140, 140 to engage each other in an overlapped manner along the longitudinal direction of the tape. As a result, distortion of the rectangularly shaped cable accommodating space R likely to occur in the pair of right and left inner circumferential wall formation sections 140, 140 is restricted. Additionally, dimensional stability of the cable accommodating space R is ensured during any time of linear movement and flexing movement.

Further, a circular open window 180 is provided at the intersection of the V groove 110 for folding the above-mentioned side wall formation section 130 and the inner circumferential wall formation section 140 and the splitting slit 150. The circular open window 180 penetrates into the cable accommodating space R. This circular open window 180 absorbs the distortion of the cable accommodating space R likely to occur by an internal movement of the cable C during linear movement and during flexing movement. As a result, excellent shape retention is ensured. Further, this construction contributes to weight reduction and also enables observation of an accommodated state of the cable C in the cable accommodating space R.

In the thus obtained folding assembly type cable protection and guide device, a cable C is accommodated into the cable accommodating space R. A cable accommodating space R of an optimum length is formed as an integrated body. The accommodation of a long body in the accommodating space is easily ensured. Further, assembly is simplified. Connecting a number of individual link plates as in a conventional protection and guide chain to provide a specific length is not necessary. Further, even if the synthetic resin film tape 100 is long, it can be easily manufactured. Since the synthetic resin film tape 100 can be easily folded using a folding V groove 110, a rectangular shape cable accommodating space R can be uniformly, reliably assembled to a predetermined size along the longitudinal direction of the tape. A synthetic resin film tape can be easily assembled by enclosing the cable with a connector from both sides along the longitudinal direction of the tape. Thus, the effects of this invention are very significant.

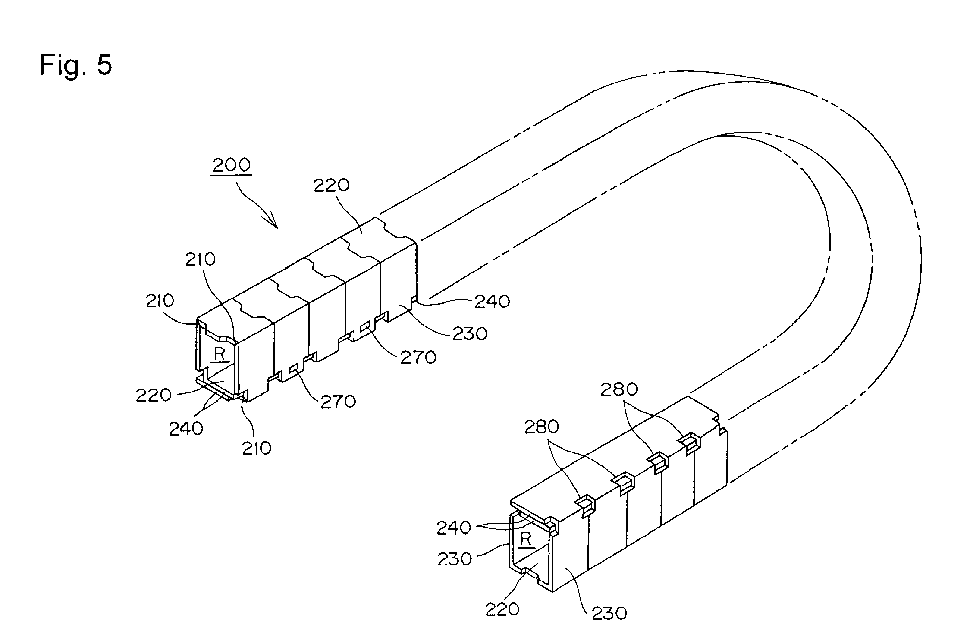

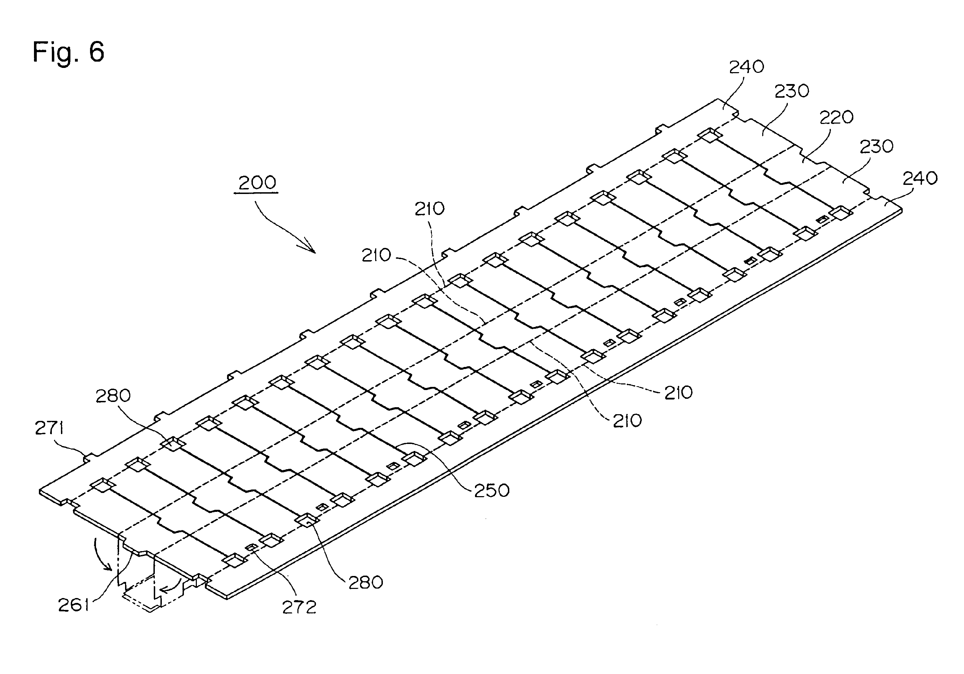

Next, a folding assembly type cable protection and guide device, which is the second example according to the present invention, will be described by use of FIGS. 5 and 6.

The folding assembly type cable protection and guide device which is the second example of the present invention is basically the same as the folding assembly type cable protection and guide device, of the first example of the present invention. Thus, the same portions as those shown in FIGS. 1 to 4 are denoted as reference numerals of 200 and the explanations of overlapped portions are omitted.

Namely, although the above-mentioned folding assembly type cable protection and guide device, which is the first example of the present invention includes circular open windows 180, the folding assembly type cable protection and guide device, which is the second example of the present invention, includes rectangular open windows 280. However, other remaining points are entirely the same.

Thus, in the folding assembly type cable protection and guide device of the second example, as in the first example, a cable C to be accommodated into the cable accommodating space R may be a long body. If the folding assembly type cable protection and guide device is cut as a continuing integrated body in accordance with the length of the long body, a cable accommodating space R of an optimum length adapted to the cable is easily provided. Further, a large assembly manufacturing burden to adapt to a new cable length by connecting a number of link plates as required in a conventional protection and guide chain is not necessary in the present invention. Further, even if a synthetic resin film tape 200 is a long body, it can be manufactured without requiring various sizes of metal molds in injection molding or casting. The synthetic resin film tape 200 can be easily manufactured without changing the size of a metal mold. The synthetic resin film tape 200 is adaptable with the length of a cable C to be accommodated into the cable accommodating space R. Since the synthetic resin film tape 200 can be easily folded using a folding V groove 210, a rectangular shape cable accommodating space R can be uniformly, reliably assembled to a predetermined size along the longitudinal direction of the tape. Thus, the effects of the second example are also very significant.

### REFERENCE NUMERALS

- 100, 200: Tape
- 110, 210: V groove
- 120, 220: Outer circumferential wall formation section
- 130, 230: Side wall formation section
- 140, 240: Inner circumferential wall formation section
- 150, 250: Splitting slit
- 160, 260: Concave portion/convex portion engagement mechanism
- 161, 261: Trapezoid tongue piece-shaped convex portion
- 162, 262: Inverse trapezoid-shaped concave portion
- 170, 270: Insertion/protrusion mechanism
- 171, 271: Insertion protrusion
- 172, 272: Insertion hole, locking aperture
- 180, 280: Open window, hole
- C: Cable
- R: Cable accommodating space, rectangularly shaped space

## Claims

1. Folding assembly type cable protection and guide device comprising: a rectangularly shaped cable accommodating space (R) extending in a longitudinal direction, and a synthetic resin film tape (100; 200), **characterized in that**
said rectangularly shaped cable accommodating space (R) is bounded by said synthetic resin film tape (100; 200), wherein
said synthetic resin film tape (100; 200) has a plurality of V grooves (110; 210), the plurality of V grooves (110; 210) extend in the longitudinal direction of the synthetic resin film tape (100; 200), and,
said synthetic resin film tape (100; 200) being folded along the V grooves (110; 210) such that the tape (100; 200) surrounds the cable accommodating space (R) during a linear movement and a flexional movement of a said folding assembly the cable protection and guide device.

2. Folding assembly type cable protection and guide device according to claim 1, **characterized in that** the synthetic resin film tape (100; 200) has:
outer circumferential wall formation sections (120; 220),
a pair of right and left side wall formation sections (130; 230),
a pair of right and left inner circumferential wall formation sections (140; 240),
said outer circumferential wall formation sections (120; 220) adjacently engage with each other in the longitudinal direction of the tape (100; 200) during linear movement and separate from each other to open at predetermined pitches in said longitudinal direction of the tape (100; 200) during flexional movement,
said pair of right and left side wall formation sections (130; 230) are adjacently disposed through a folding V groove (110; 210) on both sides of the outer circumferential wall formation section (120; 220),
said pair of right and left side wall formation sections (130; 230) adjacently engage with each other in the longitudinal direction of the tape (100 ; 200) during linear movement and separate from each other to open at predetermined pitches in said longitudinal direction of the tape (100; 200) during flexional movement, and
said pair of right and left inner circumferential wall formation sections (140; 240), which are adjacently disposed through said folding V groove (110; 210), are engaged with each other in an overlapped manner along the longitudinal direction of the tape (100; 200) during folding assembly and are oppositely disposed on the outer circumferential wall formation section (120; 220) of the cable accommodating space (R).

3. Folding assembly type cable protection and guide device according to claim 2, **characterized in that** a splitting slit (150; 250) separates the outer circumferential wall formation sections (120; 220) and the pair of right and left side wall formation sections (130; 230) from each other at a predetermined pitch in the longitudinal direction of the tape (100; 200) during flexional movement, the splitting slit (150; 250) is disposed by punching so that the splitting slit (150; 250) crosses the folding V groove (110; 210) at said predetermined pitch and splits the folding V groove (110; 210) while leaving said pair of right and left inner circumferential wall formation sections (140; 240) intact.

4. Folding assembly type cable protection and guide device according to claim 2 or 3, **characterized in that** the outer circumferential wall formation section (120; 220) includes a concave portion/convex portion engagement mechanism (160; 260) which restricts a lateral shift during linear movement.

5. Folding assembly type cable protection and guide device according to any of claims 2 to 4, **characterized in that** insertion/protrusion mechanisms (170/270), which overlap and engage with each other along the longitudinal direction of the tape (100; 200) during folding assembly, are provided at positions of predetermined intervals along the longitudinal direction of the tape (100; 200) of the pair of right and left inner circumferential wall formation section (140; 240).

6. Folding assembly type cable protection and guide device according to any of claims 3 to 5, **characterized in that** an open window (180; 280) is provided between the folding V groove (110; 210) for folding the side wall formation section (130; 230), the inner circumferential wall formation section (140; 240), and the splitting slit (150; 250).

7. Folding assembly type cable comprising a synthetic resin film tape (100; 200), wherein the synthetic resin film tape (100; 200) includes a plurality of grooves (110; 210) therein, and wherein the synthetic resin film tape (100; 200) includes an outer circumferential wall formation section (120; 220), first and second side wall formation sections (130; 230), and first and second inner circumferential wall formation sections (140; 240),
said second inner circumferential wall formation section (140; 240) includes a protrusion (171 ; 271) and said second side wall formation section (140; 240) includes a locking aperture (172; 272),
wherein said first and second side wall formation sections (130; 230) being folded along said grooves (110; 210) and said first and second inner circumferential wall formation sections (140; 240) being folded along said grooves (110; 210) forming a rectangularly shaped space (R), and, the protrusion (171; 271) of the second inner circumferential wall formation section (140; 240) interengaging the locking aperture (172; 272).

8. Folding assembly type cable as claimed in claim 7 further comprising a hole (180; 280) residing at the outer part of the side wall formation section (130; 230) and the inner wall formation section (140; 240).

9. Folding assembly type cable as claimed in claim 7 or 8 further comprising a slit (150; 250) located in the side wall formation sections (130; 230) and the outer wall formation section (120; 220).

10. Folding assembly type cable protection and guide device according to any of claims 1 to 9, **characterized in that** the synthetic resin film tape (100; 200) is molded of polypropylene.
